# EUROPÄISCHE PATENTSCHRIFT

(11) **EP 2 644 906 B1**
(45) Veröffentlichungstag und Bekanntmachung des Hinweises auf die Patenterteilung: **26.08.2020**
(21) Anmeldenummer: 13000577.0
(22) Anmeldetag: 05.02.2013
(51) Int. Cl.: F15B 13/04, F16H 61/02, F15B 13/043, G05D 16/20

(54) **Ventil, insbesondere vorgesteuertes Proportional-Druckregelventil**
Valve, in particular pilot-operated proportional pressure-regulating valve
Soupape, en particulier soupape de réglage de pression proportionnelle précommandée

(30) Priorität: 30.03.2012 DE 102012006681
(43) Veröffentlichungstag der Anmeldung: 02.10.2013
(73) Patentinhaber: Hydac Fluidtechnik GmbH, 66280 Sulzbach/Saar (DE)
(72) Erfinder: Bruck, Peter, 66484 Althornbach (DE); Hilzendegen, Philipp, 66709 Weiskirchen (DE); Schneider, Gerd, 66763 Dillingen (DE)
(74) Vertreter: Bartels und Partner, Patentanwälte

(56) Entgegenhaltungen:
- EP-B1- 0 777 829
- WO-A1-2004/102011
- US-A1- 2008 017 261

## Beschreibung

Die Erfindung betrifft ein Ventil, insbesondere ein vorgesteuertes Proportional-Druckregelventil, mit den Merkmalen im Oberbegriff von Anspruch 1.

Vorgesteuerte Proportional-Druckregelventile sind im Stand der Technik z.B. durch die US 2008/0017261 A1 bekannt. Sie werden beispielsweise in mobilen Arbeitsmaschinen zur elektrodynamischen Ansteuerung von Kupplungen verwendet. Bei der Ansteuerung dieser Kupplungen gibt es eine zwingende Forderung, dass die Ventile im abgeschalteten Zustand einen Druck von exakt Null bar (0 bar) erzeugen müssen, damit die zugeordnete Kupplung sicher trennen kann. Die diese Forderung erfüllenden Ventile haben aber einen gravierenden Nachteil. Der Vorsteuerölstrom, welcher ungenutzt zum Ablaufanschluss fließt, ist extrem groß. Oftmals erreicht der Vorsteuerölstrom einen Liter pro Minute (1 l/Min.). Auch in der Neutralstellung des Ventils fließt Vorsteueröl ungenutzt zum Ablaufanschluss ab. Das unnütze Abfließen von Vorsteueröl wird auch fachsprachlich als Leckage bezeichnet.

In komplexen Getriebeanwendungen, bei denen nicht selten eine große Anzahl von derartigen Ventilen benötigt wird, kommt es somit zu einem erheblichen Energieverlust, der im Extremfall im Kilowatt-Bereich liegen kann. Noch gravierender ist diese Leckage in Anwendungen, bei denen die Kupplungsventile mit Hilfe eines Hydraulikspeichers versorgt werden. Die hohe Leckage macht dann ein häufiges Nachladen des Hydraulikspeichers erforderlich.

Die WO 2004/102011 A1 beschreibt ein gattungsgemäßes Ventil, insbesondere vorgesteuertes Proportional-Druckregelventil, mit einem Ventilgehäuse, das einen Druckversorgungsanschluss, einen Nutzanschluss und einen Ablaufanschluss aufweist, wobei im Ventilgehäuse ein durch eine Vorsteuerstufe verlagerbarer Hauptventilkolben zur Regelung eines Fluidflusses zwischen dem Druckversorgungsanschluss und dem Nutzanschluss angeordnet ist, wobei die Vorsteuerstufe ein Ventilschließglied für eine Vorsteuerkammer aufweist, wobei das Ventilschließglied von einer Betätigungseinrichtung von einer Offenstellung in eine Schließstellung bewegbar ist, wobei durch das Ventilschließglied eine Leckagereduzierungsstufe betätigbar ist.

Ein weiteres Ventil geht aus der EP 0 777 829 B1 hervor.

Vor diesem Hintergrund stellt sich die Erfindung die Aufgabe, ein Ventil aufzuzeigen, das eine auf das notwendige Maß reduzierte Leckage aufweist. Eine Lösung dieser Aufgabe besteht in einem Ventil mit den Merkmalen von Anspruch 1. Vorteilhafte Ausführungsformen des Ventils gehen aus den Unteransprüchen 2 bis 11 hervor.

Gemäß dem Kennzeichen von Anspruch 1 ist vorgesehen, dass der Leckagekolben einen Fluidfluss zwischen dem Druckversorgungsanschluss und der Vorsteuerkammer regelt. Durch Verlagerung des Leckageventilkolbens in eine Sperrstellung ist der Fluidfluss des Vorsteueröls zur Vorsteuerkammer und von dort zum Ablaufanschluss unterbunden, wenn sich das Ventil in der unbetätigten Neutralstellung befindet.

Durch das Ventilschließglied ist die Leckagereduzierungsstufe betätigbar. Das Ventil weist somit nicht nur ein Vorsteuerventil, hier bezeichnet als Vorsteuerstufe, auf, sondern zusätzlich als Teil des Vorsteuerventils ein Leckagereduzierungsventil in Form der Leckagereduzierungsstufe. Die Leckagereduzierungsstufe ist mit dem Ventilschließglied der Vorsteuerstufe gekoppelt. Wird das Ventilschließglied durch die Betätigungseinrichtung verschoben, so wird auch die mit dem Ventilschließglied gekoppelte Leckagereduzierungsstufe in Richtung einer Offenstellung betätigt. Die Leckagereduzierungsstufe unterbricht den Vorsteuerölstrom daher nur wenn das Ventil unbetätigt ist. Durch die Leckagereduzierungsstufe ist somit in der Neutralstellung des Ventils die Leckage um ca. 90 % reduziert, ohne die sonstige Funktionalität des Ventils negativ zu beeinflussen. Der Energieverlust ist mithin minimiert und bei einem durch einen Hydraulikspeicher versorgten Ventil sind die Speichernachladezyklen um ein Vielfaches verlängert.

In diesem Zusammenhang können das Ventilschließglied und der Leckagekolben auch einstückig ausgebildet sein. Somit ist die Vorsteuerkammer wechselweise mit dem Druckversorgungsanschluss oder dem Ablaufanschluss verbunden. Diese Gestaltung stellt sicher, dass die Menge des Vorsteueröls auf das Minimum reduziert ist, das zur Betätigung der Vorsteuerstufe erforderlich ist.

Zweckmäßigerweise ist durch den Leckagekolben eine Fluidzulaufverbindung zwischen dem Druckversorgungsanschluss und der Vorsteuerkammer nur in der Schließstellung des Ventilschließgliedes hergestellt. Mithin ist sichergestellt, dass nur dann Vorsteueröl in die Vorsteuerkammer fließt, wenn in der Vorsteuerkammer ein Druck zur Betätigung des Hauptventilkolbens aufgebaut werden soll.

Der Leckagekolben ist vorteilhaft von einer Rückstellfeder entgegen der Betätigungseinrichtung beaufschlagt. Durch die Rückstellfeder wird die Fluidverbindung zwischen dem Druckversorgungsanschluss und der Vorsteuerkammer unterbrochen, wenn die Betätigungseinrichtung inaktiv ist. Durch die Rückstellfeder wird dann auch das Ventilschließglied aus seinem Vorsteuersitz gedrückt, so dass das unter hohem Druck stehende Vorsteueröl aus der Vorsteuerkammer zum Ablaufanschluss abfließen kann.

Gemäß einer weiteren Ausführungsform ist vorgesehen, dass der Leckagekolben einen Fluidablaufkanal zur Überleitung von Fluid aus der Vorsteuerkammer zum Ablaufanschluss aufweist. Mithin verläuft der Zustrom wie auch der Abstrom von Vorsteueröl zur Vorsteuerkammer über den Leckagekolben.

Besonders vorteilhaft ist die Leckagereduzierungsstufe im Ventilgehäuse zwischen dem Ventilschließglied und dem Hauptventilkolben angeordnet. Auf diese Weise kann der zur Verfügung stehende Bauraum im Ventilgehäuse optimal genutzt werden.

Bevorzugt ist die Leckagereduzierungsstufe in einem Zwischengehäuse angeordnet. Die Verwendung eines Zwischengehäuses erleichtert die Montage des Ventils erheblich. Die Leckagereduzierungsstufe kann als Baueinheit in dem Zwischengehäuse angeordnet werden, ehe das Ventil komplett zusammengebaut wird. Diese Gestaltung erlaubt es, Ventile mit und ohne Leckagereduzierungsstufe in einer Fertigungsstraße herzustellen.

Das Zwischengehäuse kann eine axiale Bohrung zur Aufnahme des Leckagekolbens und dessen Rückstellfeder aufweisen. Vorzugsweise kann endseitig an dem Zwischengehäuse eine Verliersicherung für den Leckagekolben und die Rückstellfeder vorgesehen sein. Die Verliersicherung kann insbesondere in Form eines Abschlussteils mit einem Fluidkanal ausgebildet sein. Somit ist der Leckagekolben in der axialen Bohrung axial verschiebbar angeordnet. Er wird durch eine Rückstellfeder in Richtung seiner jeweiligen Sperrstellung beaufschlagt. Die Rückstellfeder wird durch die Verliersicherung im Zwischengehäuse gehalten. Dadurch, dass das Abschlussteil einen Fluidkanal aufweist, kann Vorsteueröl innerhalb der Vorsteuerkammer von der axialen Bohrung zu einer Endfläche des Hauptventilkolbens fließen und den Hauptventilkolben mit Druck beaufschlagen, so dass dieser sich in Richtung seiner jeweiligen Arbeitsstellung bewegt.

Zur Ausbildung der Verliersicherung gibt es mehrere Möglichkeiten. Die Rückstellfeder kann eine Endfläche der Verliersicherung kontaktieren oder in einer Ausnehmung der Verliersicherung aufgenommen sein. Letztere Weiterbildung bringt eine Verkürzung des erforderlichen Bauraums mit sich.

Durch den Leckagekolben kann zweckmäßigerweise eine Fluidzulaufverbindung zwischen mindestens einer Querbohrung im Zwischengehäuse und der axialen Bohrung freigebbar sein. Somit kann Vorsteueröl vom Druckversorgungsanschluss durch die Querbohrung im Zwischengehäuse und den Leckagekolben in die Vorsteuerkammer geleitet werden.

Um den Vorsteuerölstrom vorteilhaft weiter zu reduzieren, ist eine Fluidführung zwischen dem Druckversorgungsanschluss und der Leckagereduzierungsstufe vorgesehen. Die Fluidführung ist dabei vorzugsweise durch einen Ringspalt zwischen einem Ventilgehäuseteil und dem Zwischengehäuse gebildet. Darüber hinaus hat diese Fluidführung eine Filterfunktion. Partikel im Vorsteueröl, die größer als der Ringspalt sind, werden abgefangen und können nicht weiter in die Vorsteuerstufe eindringen.

Die Erfindung ist nachfolgend anhand von zwei in den Figuren dargestellten Ausführungsbeispielen näher erläutert. Es zeigen:
- Fig. 1: eine erste Ausführungsform eines erfindungsgemäßen Ventils im Querschnitt;
- Fig.2: ein Detail des Ventils von Fig. 1, wobei die Betätigungseinrichtung inaktiv ist;
- Fig. 3: ein Detail des Ventils von Fig. 1, wobei die Betätigungseinrichtung aktiv ist;
- Fig.4: eine zweite Ausführungsform eines erfindungsgemäßen Ventils im Querschnitt;
- Fig. 5: ein Detail des Ventil von Fig. 4, wobei die Betätigungseinrichtung inaktiv ist; und
- Fig. 6: ein Detail des Ventils von Fig. 4, wobei die Betätigungseinrichtung aktiv ist.

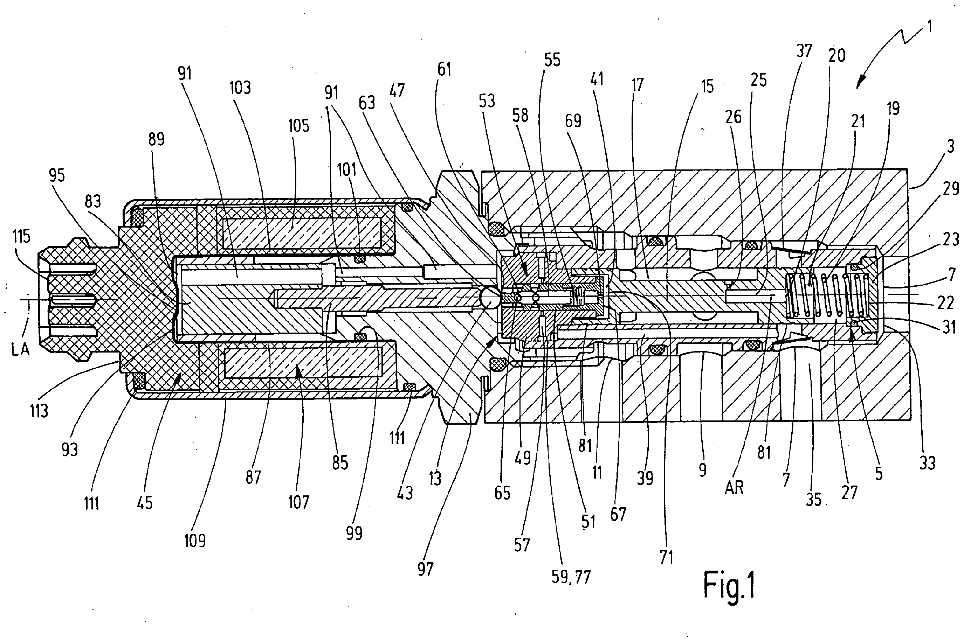

In der Fig. 1 ist ein erfindungsgemäßes Ventil 1, insbesondere ein vorgesteuertes Proportional-Druckregelventil in einem in einen Ventilblock 3 eingebauten Zustand dargestellt. Das Ventil 1 ist als so genanntes Cartridge-Ventil ausgebildet und weist ein Ventilgehäuse 5 mit einem Druckversorgungsanschluss 7, einem Nutzanschluss 9 und einem Ablaufanschluss 11 auf.

Im Ventilgehäuse 5 ist ein durch eine Vorsteuerstufe 13 axial verlagerbarer Hauptventilkolben 15, unter anderem zur Regelung des Fluidflusses zwischen dem Druckversorgungsanschluss 7 und dem Nutzanschluss 9 angeordnet. Der Hauptventilkolben 15 weist dazu eine Umfangsnut 17 auf, deren Länge in axialer Richtung AR des Hauptventilkolbens 15 so bemessen ist, dass wechselweise eine Verbindung zwischen dem Nutzanschluss 9 und dem Druckversorgungsanschluss 7 bzw. dem Ablaufanschluss 11 hergestellt ist. Der Fluidstrom lässt sich also vom Druckversorgungsanschluss 7 zum Nutzanschluss 9 sowie vom Nutzanschluss 9 zum Ablaufanschluss 11 stufenlos regeln. Der Hauptsteuerkolben 15 ist von einer Hauptrückstellfeder 19 in Richtung einer in der Figur 1 gezeigten Neutralstellung beaufschlagt, in der eine Fluidverbindung zwischen dem Nutzanschluss 9 und dem Ablaufanschluss 11 hergestellt ist. Die Hauptrückstellfeder 19 greift mit ihrem einen Ende 20 in eine endseitige Ausnehmung 21 des Hauptventilkolbens 15 ein und ist an ihrem anderen Ende 22 durch eine Schraube 23 im Ventilgehäuse 5 gehalten. Der Hauptventilkolben 15 ist auf der Seite mit der Hauptrückstellfeder 19 druckentlastet. Im Hauptventilkolben 15 ist dazu eine Druckentlastungsbohrung 25 mit Drosselstelle vorgesehen, welche die Umfangsnut 17 mit einer Kammer 27, in der die Hauptrückstellfeder 19 angeordnet ist, fluidleitend verbindet. Die endseitige Schraube 23 weist eine Umfangsnut 29 zur Aufnahme eines O-Ringes 31 zur Abdichtung der Kammer 27 nach außen hin auf.

Der Druckversorgungsanschluss 7 ist entweder am Ventilboden 33 oder gemäß der Lösung nach der Fig. 1 in einen seitlichen Anschluss 35 des Ventilblockes 3 einmündend in der Nähe des Ventilbodens 33 vorgesehen. Öl, das in das Ventil 1 einströmt, wird durch ein umfangsseitiges, konisches Sieb 37 gefiltert, das den Druckversorgungsanschluss 7 überdeckt.

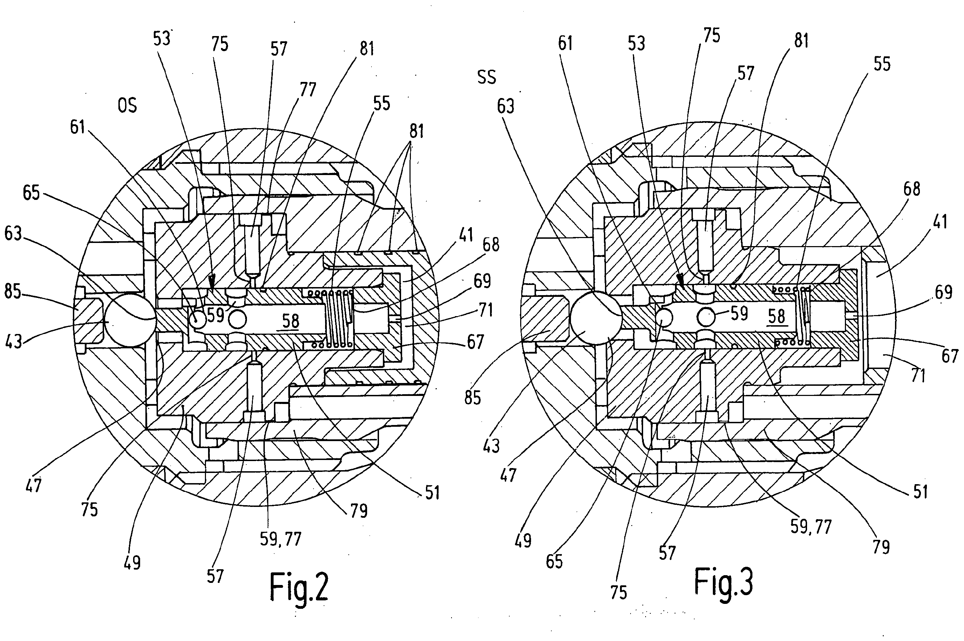

Die Bewegung des Hauptkolbens 15 wird durch die Vorsteuerstufe 13 gesteuert. Im Ventilgehäuse 5 ist ein axial zur Längsachse LA des Ventils 1 versetzter Fluidkanal 39 zur Überleitung von Vorsteueröl vom Druckversorgungsanschluss 7 zu einer Vorsteuerkammer 41 der Vorsteuerstufe 13 vorgesehen. Die Vorsteuerstufe 13 umfasst ein Ventilschließglied 43 in Form einer Kugel zum Schließen der Vorsteuerkammer 41. Das Ventilschließglied 43 ist dazu von einer Betätigungseinrichtung 45 von einer Offenstellung OS (Fig. 2) in eine Schließstellung SS (Fig. 3) bewegbar. Wird das Ventilschließglied 43 durch die Betätigungseinrichtung 45 bewegt, so wird es gegen einen Ventilsitz 47 in einem Zwischengehäuse 49 des Ventilgehäuses 5 gedrückt und somit die Fluidverbindung von der Vorsteuerkammer 41 zum Ablaufanschluss 11 unterbrochen.

Gleichzeitig beaufschlagt das Ventilschließglied 43 einen Leckagekolben 51 einer Leckagereduzierungsstufe 53 entgegen der Wirkung einer Rückstellfeder 55 im Zwischengehäuse 49. Sowohl der Leckagekolben 51 als auch die Rückstellfeder 55 sind in einer axialen Bohrung 58 des Zwischengehäuses 49 angeordnet. Im betätigten Zustand des Ventilschließgliedes 43 wird somit eine Fluidverbindung zwischen Querbohrungen 57 und der axialen Bohrung 58 im Zwischengehäuse 49 durch den Leckagekolben 51 geöffnet, so dass Vorsteueröl vom Druckversorgungsanschluss 7 über eine Fluidzulaufverbindung 59 in die Vorsteuerkammer 41 einfließen und den Hauptventilkolben 15 endseitig beaufschlagen kann.

Diese Fluidzulaufverbindung 59 ist durch einen Ringspalt 77 zwischen dem Außenumfang des Zwischengehäuses 49 und dem Innenumfang des Ventilgehäuses 5 (Ventilgehäuseteil 79 in Fig. 2) gebildet im Bereich des Fluidübergangs zwischen Fluidkanal 39 und den Querbohrungen 57 im Zwischengehäuse 49. Wird das Ventilschließglied 43 nicht mehr von der Betätigungseinrichtung 45 in den Ventilsitz 47 gepresst, in dem man die Betätigungseinrichtung 45 stromlos schaltet, so drückt die Rückstellfeder 55 den Leckagekolben 51 von der Schließstellung (Fig. 3) in die offene Stellung (Fig. 2), in der die Fluidzulaufverbindung 59 zwischen dem Druckversorgungsanschluss 7 über die Querbohrungen 57 und der Vorsteuerkammer 41 unterbrochen und ein Fluidablaufkanal 61 zwischen der Vorsteuerkammer 41 und dem Ablaufanschluss 11 geöffnet sind.

Der Leckagekolben 51 (Fig. 2, 3) ist an der das Ventilschließglied 43 kontaktierenden Endseite 63 verjüngt und weist Querbohrungen 65 als Teil des Fluidablaufkanals 61 auf. Die Rückstellfeder 55 ist durch eine endseitige Verliersicherung 67 in Form eines Abschlussteils im Zwischengehäuse 49 gehalten. Dabei kontaktiert die Rückstellfeder 55 eine Endfläche des Abschlussteils 67. Zur Überleitung des Vorsteueröls von der axialen Bohrung 58 im Zwischengehäuse 49 zum Hauptventilkolben 15 ist das Abschlussteil 67 mit einem Fluidkanal 69 in Form einer Drossel versehen, die der Dämpfung des Hauptventil- oder Regelkolbens 15 dient. Der Hauptventilkolben 15 (Fig. 1) weist endseitig eine Ausnehmung 71 auf, in welche das Zwischengehäuse 49 und die Verliersicherung 67 eingreifen. Die Leckagereduzierungsstufe 53 ist mithin im Ventilgehäuse 5 zwischen dem Ventilschließglied 43 und dem Hauptventilkolben 15 in dem Zwischengehäuse 49 bauraumsparend angeordnet.

Die Querbohrungen 57 des Zwischengehäuses 49 sind im Querschnitt verjüngt, um Vorsteuerblenden 75 auszubilden (s. Fig. 2, 3). Zwischen dem Druckversorgungsanschluss 7 und den Querbohrungen 57 im Zwischengehäuse 49 ist der Ringspalt 77 zwischen dem Zwischengehäuse 49 und dem Ventilgehäuseteil 79 ausgebildet. Durch den geringen Durchmesser des Ringspalts 77 wird eine Engstelle als Fluidführung gebildet, die auch als Filter dient. Partikel des Vorsteueröls, die größer als der Ringspalt 77 sind, werden aufgehalten, so dass sie nicht in die Vorsteuerstufe 13 eindringen können.

Zum Zwecke der Abdichtung weisen der Hauptventilkolben 15 und der Leckagekolben 51 umfangsseitig umlaufende Druckzentriernuten 81 auf.

Das Ventil 1 wird durch eine elektromagnetische Betätigungseinrichtung 45 gesteuert. Diese weist einen Magnetanker 83 auf, der über ein stangenförmiges Betätigungsteil 85 auf das Ventilschließglied 43 einwirkt. Der Magnetanker 83 ist längsverschiebbar in einer topfförmigen Druckhülse 87 geführt. Zwischen dem Ablaufanschluss 11 und einem Ankerraum 89 des Magnetankers 83 ist eine Druckentlastungsbohrung 91 vorgesehen. Die Druckhülse 87 weist einen eingezogenen Boden 93 auf, der als Anschlag 95 für den Magnetanker 83 fungiert. Die Druckhülse 87 ist auf einen Polkern 97 aufgeschoben. Der Polkern 97 weist eine Umfangsnut 99 mit einem O-Ring 101 zur Abdichtung des Ankerraums 89 auf. Weiterhin ist auf die Druckhülse 87 aufgesteckt ein Spulenkörper 103 mit Spulenwicklungen 105 vorgesehen. Außenseitig ist die Magnetspule 107 durch eine Hülse 109 eingefasst, die endseitig verbördelt und durch zwei O-Ring-Dichtungen 111 abgedichtet ist. Am freien Ende 113 weist die Betätigungseinrichtung 45 einen Steckanschluss 115 zur Verbindung mit einer Steuereinheit und eine Stromquelle auf.

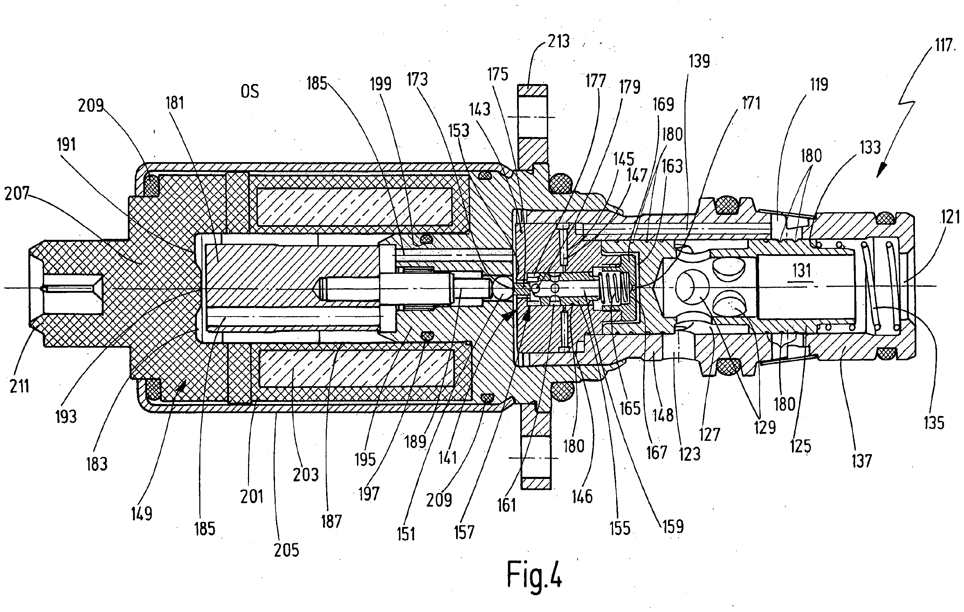

Die zweite Ausführungsform des Ventils 117, die in den Figuren 4 bis 6 dargestellt ist, zeichnet sich durch eine kürzere Bauform aus. Das Ventil ist ebenfalls als Cartridge-Ventil ausgeführt.

Bezeichnend für die zweite Ausführungsform ist, dass ein Druckversorgungsanschluss 119 mittig zwischen einem bodenseitigen Nutzanschluss 121 und einem Ablaufanschluss 123 angeordnet ist. Der Hauptventilkolben 125 weist eine Umfangsnut 127 auf, durch welche in der Neutralstellung des Ventils 117 die Fluidverbindung zwischen dem Druckversorgungsanschluss 119 und dem Ablaufanschluss 123 hergestellt ist. Die Umfangsnut 127 weist ferner Bohrungen 129 zu einer axialen Sacklochbohrung 131 des Hauptventilkolbens 125 auf, um eine Fluidverbindung von der Umfangsnut 127 zum Nutzanschluss 121 herzustellen. Der Hauptventilkolben 125 weist endseitig einen Absatz 133 auf, in den eine Hauptrückstellfeder 135 eingreift, die endseitig im Ventilgehäuse 137 gehalten ist. Aufgrund der mittigen Anordnung des Druckversorgungsanschlusses 119 ist auch ein axialer Vorsteuerölkanal 139 im Ventilgehäuse 137 in der Länge verkürzt. Der Vorsteuerölkanal 139 verbindet den Druckversorgungsanschluss 119 mit einer Vorsteuerstufe 141, die an einem Zwischengehäuse 143 angeordnet ist. Zwischen dem axialen Vorsteuerölkanal 139 und Querbohrungen 145 im Zwischengehäuse 143 ist eine als Engstelle ausgebildete Fluidführung 146 vorgesehen. Die Fluidführung 146 ist als Ringspalt zwischen dem Zwischengehäuse 143 und einem Ventilgehäuseteil 148 ausgebildet.

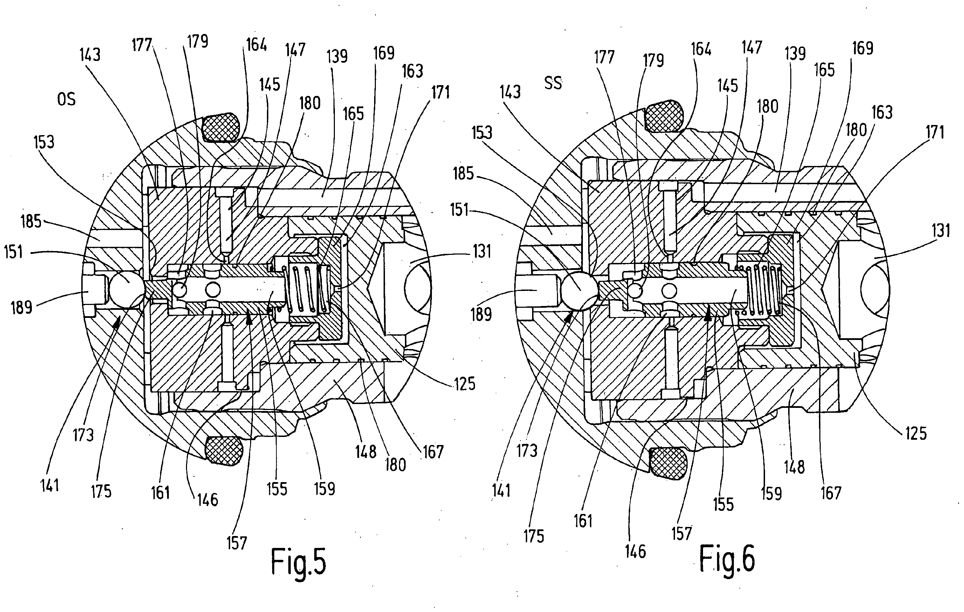

In der Vorsteuerstufe 141 ist durch eine Betätigungseinrichtung 149 ein Ventilschließglied 151 in Form einer Kugel betätigbar und gegen einen Ventilsitz 153 im Zwischengehäuse 143 drückbar. Durch das Ventilschließglied 151 wird ein Leckagekolben 155 einer Leckagereduzierungsstufe 157 betätigt, der eine Verbindung zwischen den Querbohrungen 145 im Zwischengehäuse 143 und einer axialen Bohrung 159 herstellt. Der Leckagekolben 155 weist dazu Querbohrungen 161 auf, die den Querbohrungen 145 im Zwischengehäuse 143 entsprechen. Das Vorsteueröl kann somit durch das Zwischengehäuse 143 und den Leckagekolben 155 als Fluidzulaufverbindung 147 in eine Vorsteuerkammer 163 übergeleitet werden. Ferner weist das Zwischengehäuse 143 verjüngte Querschnitte in den Querbohrungen 161 auf, um Vorsteuerblenden 164 auszubilden (Fig. 5, 6). Der Leckagekolben 155 ist endseitig von einer Rückstellfeder 165 beaufschlagt, welche in einer Ausnehmung 167 einer endseitig am Zwischengehäuse 143 vorgesehenen Schraube 169 gehalten ist. Die Schraube 169 ist eine Verliersicherung und weist eine Bohrung 171 zur Überleitung von Fluid in der Vorsteuerkammer 163 auf. An dem der Rückstellfeder 165 gegenüberliegenden Ende 173 ist der Leckagekolben 155 verjüngt und weist ein Betätigungsstück 175 auf, über welches er mit dem Ventilschließglied 151 in Kontakt steht. Wenn das Ventilschließglied 151 sich in seiner Offenstellung OS befindet, ist ein Fluidablaufkanal 177 über Querbohrungen 179 im Leckagekolben 143 zwischen der Vorsteuerkammer 163 und dem Ablaufanschluss 123 hergestellt.

Zum Zwecke der Abdichtung weisen der Hauptventilkolben 125 und der Leckagekolben 155 umfangsseitig umlaufende Druckzentriernuten 180 auf. Das Ventil 117 wird durch die elektromagnetische Betätigungseinrichtung 149 betätigt. Die Betätigungseinrichtung 149 weist einen Magnetanker 181 auf, dessen Ankerraum 183 durch Druckentlastungsbohrungen 185 gegenüber dem Ablaufanschluss 123 druckentlastet ist. Der Magnetanker 181 ist axial verschiebbar in einer Druckhülse 187 angeordnet und wirkt über ein stangenförmiges Betätigungsteil 189 auf das Ventilschließglied 151 ein. Die Druckhülse 187 weist einen eingezogenen Boden 191 auf, der als Anschlag 193 für den Magnetanker 181 fungiert. Die Drückhülse 187 ist auf den Polkern 195 steckend aufgesetzt und über eine O-Ring-Dichtung 197 in einer Umfangsnut 199 des Polkerns 195 abgedichtet. Außenseitig ist auf die Druckhülse 187 ein Spulenkörper 201 mit aufgewickelten Spulenwindungen 203 geschoben, welche durch eine Hülse 205 gegenüber der Umgebung geschützt sind. Die Hülse 205 ist mit dem Polkern 195 und einem Abschlussteil 207 verbördelt und durch O-Ring-Dichtungen 209 abgedichtet. Endseitig weist die Betätigungseinrichtung 149 einen Steckverbindungsanschluss 211 zur Koppelung mit einer Steuereinheit auf. Am Polkern 195 ist ein ringförmiges Flanschteil 213 zur Befestigung des Ventils 117 an einem Ventilblock vorgesehen.

In beiden Ausführungsformen des erfindungsgemäßen Ventils 1, 117 ist unterhalb des Ventilsitzes 47, 153 der Vorsteuerstufe 13, 141 eine Leckagereduzierungsstufe 53, 157 angeordnet, durch welche die Vorsteuerkammer 41, 163 wechselweise oder mit gleitenden Übergängen mit dem Druckversorgungsanschluss 7, 119 oder dem Ablaufanschluss 11, 123 verbindbar ist. Somit kann die Leckage des Vorsteueröls, das insbesondere in der Neutralstellung der herkömmlichen Ventile nutzlos zum Ablaufanschluss 11, 123 abfließt, minimiert werden. Dadurch verringern sich die Verlustleistung des Ventils 1, 117 und eine eventuelle Zykluszeit eines vorgeschalteten Hydraulikspeichers. Mithin zeichnet sich das erfindungsgemäße Ventil 1, 117 durch eine hohe Energieeffizienz aus.

## Patentansprüche

1. Ventil, insbesondere vorgesteuertes Proportional-Druckregelventil, mit einem Ventilgehäuse (5, 137), das einen Druckversorgungsanschluss (7, 119), einen Nutzanschluss (9, 121) und einen Ablaufanschluss (11, 123) aufweist, wobei im Ventilgehäuse (5, 137) ein durch eine Vorsteuerstufe (13, 141) verlagerbarer Hauptventilkolben (15, 125) zur Regelung eines Fluidflusses zwischen dem Druckversorgungsanschluss (7, 119) und dem Nutzanschluss (9, 121) angeordnet ist, wobei die Vorsteuerstufe (13, 141) ein Ventilschließglied (43, 151) für eine Vorsteuerkammer (41, 163) aufweist, wobei das Ventilschließglied (43, 151) von einer Betätigungseinrichtung (45, 149) von einer Offenstellung (OS) in eine Schließstellung (SS) bewegbar ist, wobei durch das Ventilschließglied (43, 151) eine Leckagereduzierungsstufe (53, 157) betätigbar ist, wobei die Leckagereduzierungsstufe (53, 157) einen mit dem Ventilschließglied (43, 151) gekoppelten Leckagekolben (51, 155) aufweist, **dadurch gekennzeichnet, dass** der Leckagekolben (51,155) einen Fluidfluss zwischen dem Druckversorgungsanschluss (7, 119) und der Vorsteuerkammer (41, 163) regelt.

2. Ventil nach Anspruch 1, **dadurch gekennzeichnet, dass** das Ventilschließglied (43, 151) und der Leckagekolben (51, 155) einstückig ausgebildet sind.

3. Ventil nach Anspruch 1 oder 2, **dadurch gekennzeichnet, dass** durch den Leckagekolben (51, 155) eine Fluidzulaufverbindung (59, 147) zwischen dem Druckversorgungsanschluss (7, 119) und der Vorsteuerkammer (41, 163) nur in der Schließstellung (SS) bzw. Regelstellung des Ventilschließgliedes (43, 151) hergestellt ist.

4. Ventil nach einem der Ansprüche 1 bis 3, **dadurch gekennzeichnet, dass** der Leckagekolben (51, 155) von einer Rückstellfeder (55, 165) entgegen der Betätigungseinrichtung (45, 149) beaufschlagt ist.

5. Ventil nach einem der Ansprüche 1 bis 4, **dadurch gekennzeichnet, dass** der Leckagekolben (51, 155) einen Fluidablaufkanal (61, 177) zur Überleitung von Fluid aus der Vorsteuerkammer (43, 163) an den Ablaufanschluss (11, 123) aufweist.

6. Ventil nach einem der vorhergehenden Ansprüche, **dadurch gekennzeichnet, dass** die Leckagereduzierungsstufe (53, 157) im Ventilgehäuse (5, 137) zwischen dem Ventilschließglied (43, 151) und dem Hauptventilkolben (15, 125) angeordnet ist.

7. Ventil nach einem der vorhergehenden Ansprüche, **dadurch gekennzeichnet, dass** die Leckagereduzierungsstufe (53, 157) in einem Zwischengehäuse (49, 143) angeordnet ist.

8. Ventil nach Anspruch 7, wenn Anspruch 7 auf Anspruch 4 rückbezogen ist, **dadurch gekennzeichnet, dass** das Zwischengehäuse (49, 143) eine axiale Bohrung (58, 159) zur Aufnahme des Leckagekolbens (51, 155) und dessen Rückstellfeder (55, 165) aufweist und dass endseitig an dem Zwischengehäuse (49, 143) eine Verliersicherung (67, 169) vorgesehen ist, insbesondere in Form einer Schraube mit einem Fluidkanal (69, 171).

9. Ventil nach Anspruch 8, **dadurch gekennzeichnet, dass** die Rückstellfeder (55, 165) eine Endfläche (68) der Verliersicherung (67) kontaktiert oder in einer Ausnehmung (167) der Verliersicherung (165) aufgenommen ist.

10. Ventil nach einem der Ansprüche 8 bis 9, **dadurch gekennzeichnet, dass** durch den Leckagekolben (51, 155) eine Fluidzulaufverbindung (59, 148) zwischen mindestens einer Querbohrung (57, 145) im Zwischengehäuse (49, 143) und der axialen Bohrung (58, 159) freigebbar ist.

11. Ventil nach einem der Ansprüche 7 bis 9, **dadurch gekennzeichnet, dass** eine Drossel (77, 146) zwischen dem Druckversorgungsanschluss (7, 119) und der Leckagereduzierungsstufe (53, 171) vorgesehen ist, wobei die Drossel (77, 146) vorzugsweise durch einen Ringspalt zwischen einem Ventilgehäuseteil (79, 148) und dem Zwischengehäuse (49, 143) ausgebildet ist.

## Claims

1. Valve, especially a pilot-operated proportional pressure control valve, with a valve housing (5, 137) comprising a pressure supply port (7, 119), a service port (9, 121) and a drainage port (11, 123), a main valve piston (15, 125), which can be displaced by a pilot control stage (13, 141), being arranged in the valve housing (5, 137) to control a flow of fluid between the pressure supply port (7, 119) and the service port (9, 121), the pilot control stage (13, 141) comprising a valve closing element (43, 151) for a pilot control chamber (41, 163), the valve closing element (43, 151) being able to be moved by an actuating device (45, 149) from an open position (OS) into a closed position (SS), a leakage reduction stage (53, 157) being able to be actuated by the valve closing element (43, 151), said leakage reduction stage (53, 157) comprising a leakage piston (51, 155) coupled to the valve closing element (43, 151), **characterised in that** the leakage piston (51, 155) controls a flow of fluid between the pressure supply port (7, 119) and the pilot control chamber (41, 163).

2. Valve according to claim 1, **characterised in that** the valve closing element (43, 151) and the leakage piston (51, 155) are designed as one piece.

3. Valve according to either claim 1 or claim 2, **characterised in that** a fluid feed connection (59, 147) is produced by the leakage piston (51, 155) between the pressure supply port (7, 119) and the pilot control chamber (41, 163), but only in the closed position (SS) or control position of the valve closing element (43, 151).

4. Valve according to any one of claims 1 to 3, **characterised in that** a return spring (55, 165) acts on the leakage piston (51, 155) against the actuating direction (45, 149).

5. Valve according to any one of claims 1 to 4, **characterised in that** the leakage piston (51, 155) comprises a fluid drainage channel (61, 177) to transfer fluid from the pilot control chamber (43, 163) to the drainage port (11, 123).

6. Valve according to any one of the preceding claims, **characterised in that** the leakage reduction stage (53, 157) in the valve housing (5, 137) is arranged between the valve closing element (43, 151) and the main valve piston (15, 125).

7. Valve according to any one of the preceding claims, **characterised in that** the leakage reduction stage (53, 157) is arranged in an intermediate housing (49, 143).

8. Valve according to claim 7, if claim 7 relates back to claim 4, **characterised in that** the intermediate housing (49, 143) comprises an axial hole (58, 159) to receive the leakage piston (51, 155) and its return spring (55, 165), and **in that** a retainer (67, 169) is provided at the end on the intermediate housing (49, 143), especially in the form of a bolt with a fluid channel (69, 171).

9. Valve according to claim 8, **characterised in that** the return spring (55, 165) is in contact with an end surface (68) of the retainer (67) or is received in a recess (167) in the retainer (165).

10. Valve according to any one of claims 8 to 9, **characterised in that** a fluid feed connection (59, 148) between at least one transverse hole (57, 145) in the intermediate housing (49, 143) and the axial hole (58, 159) can be released by the leakage piston (51, 155).

11. Valve according to any one of claims 7 to 9, **characterised in that** a throttle (77, 146) is provided between the pressure supply port (7, 119) and the leakage reduction stage (53, 171), the throttle valve (77, 146) preferably being formed by an annular gap between a valve housing part (79, 148) and the intermediate housing (49, 143).

## Revendications

1. Soupape, notamment soupape de régulation de la pression pilotée de type proportionnel, comprenant un corps (5, 137) de soupape, qui a un raccord (7, 119) d'alimentation en pression, un raccord (9, 121) utile et un raccord (11, 123) d'évacuation, dans laquelle, dans le corps (5, 137) de la soupape est disposé un piston (15, 125) de soupape principal pouvant être déplacé par un étage (13, 141) pilote pour réguler un flux de fluide entre le raccord (7, 119) d'alimentation en pression et le raccord (9, 121) utile, l'étage (13, 141) pilote ayant un obturateur (43, 151) d'une chambre (41, 163) pilote, l'obturateur (43, 151) pouvant être déplacé par un dispositif (45, 149) d'actionnement d'une position (OS) ouverte à une position (SS) d'obturation, dans laquelle un étage (53, 157) de réduction de fuite peut être actionné par l'obturateur (43, 151), l'étage (53, 157) de réduction de fuite ayant un piston (51, 155) de fuite accouplé à l'obturateur (43, 151), **caractérisée en ce que** le piston (51, 155) de fuite règle un flux de fluide entre le raccord (7, 119) d'alimentation en pression et la chambre (41, 163) pilote.

2. Soupape suivant la revendication 1, **caractérisée en ce que** l'obturateur (43, 151) de la soupape et le piston (51, 155) de fuite sont constitués d'une seule pièce.

3. Soupape suivant la revendication 1 ou 2, **caractérisée en ce qu'**il est ménagé, par le piston (51, 155) de fuite une liaison (59, 147) d'arrivée de fluide entre le raccord (7, 119) d'alimentation en pression et la chambre (41, 163) pilote, seulement dans la position (SS) d'obturation ou la position de réglage de l'obturateur (43, 151).

4. Soupape suivant l'une des revendications 1 à 3, **caractérisée en ce que** le piston (51, 155) de fuite est soumis à l'action d'un ressort (55, 165) de rappel à l'encontre du dispositif (45, 149) d'actionnement.

5. Soupape suivant l'une des revendications 1 à 4, **caractérisée en ce que** le piston (51, 155) de fuite a un conduit (61, 177) d'évacuation de fluide pour faire passer du fluide de la chambre (43, 163) pilote au raccord (11, 123) d'évacuation.

6. Soupape suivant l'une des revendications précédentes, **caractérisée en ce que** l'étage (53, 157) de réduction de fuite est disposé dans le corps (5, 137) de la soupape entre l'obturateur (43, 151) de la soupape et le piston (15, 125) de soupape principal.

7. Soupape suivant l'une des revendications précédente, **caractérisée en ce que** l'étage (53, 157) de réduction de fuite est disposé dans un boîtier (49, 143) intermédiaire.

8. Soupape suivant la revendication 7 lorsque la revendication 7 se rapporte à la revendication 4, **caractérisée en ce que** le boîtier (49, 143) intermédiaire a un trou (58, 159) axial de réception du piston (51, 155) de fuite et de son ressort (55, 165) de rappel et **en ce que**, du côté de l'extrémité du boîtier (49, 143) intermédiaire, est prévue un dispositif de sécurité (67, 169) vis-à-vis d'une perte, sous la forme notamment d'une vis ayant un conduit (69, 171) pour du fluide.

9. Soupape suivant la revendication 8, **caractérisée en ce que** le ressort (55, 165) de rappel est en contact avec une surface (68) d'extrémité du dispositif de sécurité (67) vis-à-vis d'une perte ou est logé dans un évidement (167) du dispositif de sécurité (165) vis-à-vis d'une perte.

10. Soupape suivant l'une des revendications 8 à 9, **caractérisée en ce que**, par le piston (51, 155) de fuite, une liaison (59, 148) d'afflux de fluide, entre au moins un trou (57, 145) transversal dans le boîtier (49, 143) intermédiaire et le trou (58, 159) axial, peut être dégagée.

11. Soupape suivant l'une des revendications 7 à 9, **caractérisée en ce qu'**il est prévu un étranglement (77, 146) entre le raccord (7, 119) d'alimentation en pression et l'étage (53, 171) de réduction de fuite, l'étranglement (77, 146) étant constitué, de préférence, par un intervalle annulaire entre une partie (79, 148) du corps de la soupape et le boîtier (49, 143) intermédiaire.
